# EUROPÄISCHE PATENTSCHRIFT

(11) **EP 2 445 789 B1**
(45) Veröffentlichungstag und Bekanntmachung des Hinweises auf die Patenterteilung: **01.04.2015**
(21) Anmeldenummer: 09776798.2
(22) Anmeldetag: 22.06.2009
(51) Int. Cl.: B64D 9/00

(54) **RIEGELELEMENT**
LOCKING BAR ELEMENT
ELEMENT DE VERROUILLAGE

(43) Veröffentlichungstag der Anmeldung: 02.05.2012
(73) Patentinhaber: Telair International GmbH, 83714 Miesbach (DE)
(72) Erfinder: HUBER, Thomas, 83727 Schliersee (DE); HOLZNER, Richard, 83071 Stephanskirchen (DE)
(74) Vertreter: Bohnenberger, Johannes
(86) Internationale Anmeldenummer: PCT/EP2009/004484
(87) Internationale Veröffentlichungsnummer: WO 2010/149179

(56) Entgegenhaltungen:
- EP-A1- 1 935 782
- DE-C1- 4 102 274
- FR-A1- 2 117 983
- FR-A1- 2 500 805
- US-A1- 2008 304 931

## Beschreibung

Die Erfindung betrifft ein Riegelelement zum Sichern von Containern oder dergleichen Fracht auf einem Frachtraumboden eines Flugzeugs nach dem Oberbegriff des Patentanspruchs 1, einen Frachtraumboden nach Patentanspruch 11 sowie ein Verfahren zur Konfiguration eines Frachtraumes eines Flugzeugs nach Anspruch 13.

Container oder dergleichen Fracht, die auf dem Frachtraumboden gesichert werden sollen, können unterschiedliche Größen haben. Insbesondere gibt es für Container verschiedene Normgrößen, wie z.B. 223,52 cm (88 Zoll) und 243,84 cm (96 Zoll). Zum Festhalten der Container werden Riegelelemente mit Riegeln verwandt. Die Riegel umgreifen und halten einen Teilabschnitt des Containers. Hierzu müssen die Abstände zwischen Riegeln zum Festhalten des Containers mit der Größe des jeweiligen Containers korrespondieren. Wenn die Abstände der Riegel nicht mit der Größe des Containers korrespondieren, kann der Container von den Riegeln nicht gesichert werden.

Aus der EP 0753 457 B1 ist ein Riegelelement der eingangs genannten Art bekannt. Die Position der Riegel dieses Riegelelements ist nicht veränderbar. Somit kann der Abstand von Riegeln nicht auf Container verschiedener Größe angepasst werden.

Dokument FR 2 500 805 A1, welche alle Merkmale des Oberbegriffs des Anspruchs 1 aufweist, wird als nächstliegender Stand der Technik angesehen.

Der Erfindung liegt die Aufgabe zugrunde, ein Riegelelement mit Riegeln zum Sichern von Containern aufzuzeigen, bei dem die Abstände zwischen Riegeln auf verschiedene Größen von Containern anpassbar sind.

Diese Aufgabe wird durch ein Riegelelement nach Anspruch 1 gelöst.

Ein wesentlicher Punkt der Erfindung besteht darin, dass mindestens ein Riegel (vorzugsweise zwei) mit Klauen zum Festhalten der Container in einer Führung eines Rahmens des Riegelelements in der Querrichtung des Flugzeugs (y; -y) verschiebbar und festsetzbar ist. Hierdurch ist die Position des Riegels und somit der Abstand zwischen Riegeln zum Sichern eines Containers auf verschiedene Größen von Containern anpassbar. Vorzugsweise verfügt der Riegel über lösbare Festsetzungsvorrichtungen zum Festsetzen des Riegels an der Führung im Rahmen, damit der Abstand zwischen Riegeln verschiedener Riegelelemente einfach und schnell verändert werden kann.

In einer Ausführungsform umfassen die Festsetzvorrichtungen Rastelemente zum Verriegeln des Riegels und Gegenrastelemente an definierten Positionen im Rahmen. Hierdurch kann der Riegel schnell gelöst und an den definierten Positionen festgesetzt werden. Damit ist der Riegel schnell und einfach auf vorbestimmte Abstände zu anderen Riegeln bzw. Größen der Container, insbesondere Normgrößen einstellbar.

In einer weiteren Ausführungsform ist die Festsetzvorrichtung derart federnd ausgebildet, dass der Riegel entgegen einer Federkraft in die Querrichtung (y; -y) verschiebbar ist. Durch die Federkraft wird der Riegel gegen den Container gedrückt, den der Riegel sichert. Sollte sich der Abstand zwischen den Riegeln und dem gesicherten Container durch eine Verformung des Frachtraumbodens (insbesondere im Flügelbereich) vergrößern, so bewegt die Federkraft den Riegel auf den Container zu und gleicht somit die Verformung des Frachtraumbodens aus. Dadurch wird sichergestellt, dass auch bei einer Verformung des Frachtraumbodens der Riegel einen Teilabschnitt des Containers umgreift und hält. Bei einer Verkleinerung des Abstands zwischen dem Riegel und weiteren Riegeln zum Sichern des Containers durch eine Verformung des Frachtraumbodens wird der Riegel vom gesicherten Container gegen die Federkraft bewegt und somit die Verformung ausgeglichen. Hierdurch wird eine zu große Belastung des Riegels, die zu einem Abbrechen des Riegels bzw. der Klaue führen kann, verhindert.

Die Festsetzvorrichtung kann im Rahmen geführte und federbeaufschlagte Rastschlitten als Gegenrastelemente umfassen. Einer der Vorteile hiervon ist, dass die Federung sich im Rahmen befindet und somit der Riegel leichter ist. Zudem kann die Federung leichter ausgetauscht werden.

Der Riegel kann einen Fahrschlitten umfassen, in welchem die Klaue verschwenkbar gelagert ist und der in der Führung verschiebbar und festsetzbar ist. Ein Vorteil hiervon ist u.a., dass weitere Teile wie z.B. Lastaufnahmeeinrichtungen, die im Fahrschlitten angebracht werden können, stets zusammen mit dem Riegel verschoben werden.

In einer Ausführungsform umfasst der Riegel eine Schwenkachse, um welche der Riegel von einer hochgestellten Arbeitsposition in eine abgesenkte Ladeposition verschwenkbar gehalten ist. Dadurch kann der Riegel derart abgesenkt werden, dass das Riegelelement und der Riegel von Containern überfahren werden können. Bevorzugt bildet die Schwenkachse denjenigen Teil der Festsetzvorrichtungen, über welchen beim Halten auftretende Kräfte in den Rahmen geleitet werden. Durch diese Ausführungsform werden auf den Rahmen wirkende Scherkräfte bzw. Drehmomente reduziert, die dadurch entstehen, dass Kräfte auf den Riegel wirken.

In einer weiteren Ausführungsform umfasst die Schwenkachse Achsstummel, die zum Lösen der Festsetzvorrichtungen entgegen einer Federkraft verschiebbar gelagert sind. Der Vorteil hiervon ist u.a., dass die Festsetzvorrichtungen in der Form von Achsstummeln einfach gelöst werden können, indem sie in den Riegel eingefahren werden können. Ein weiterer Vorteil ist, dass die Achsstummel an den definierten Positionen durch die Federkraft einrasten.

Die Befestigungseinrichtungen können mit dem Rahmen in Längsrichtung (x) verschiebbar verbunden sein, wobei vorzugsweise Teile der Befestigungseinrichtungen im Bereich von, vorzugsweise zentrisch zu Längsenden von in Querrichtung (y) verlaufenden Seitenschienen des Rahmens angeordnet sind. Durch die Verschiebbarkeit kann die Position des Riegels in Längsrichtung (x) an die Position der Container angepasst werden. Durch Anordnung von Teilen der Befestigungseinrichtungen zentrisch zu den Längsenden von in Querrichtung (y) verlaufenden Seitenschienen des Rahmens wird eine bessere Kraftübertragung vom Rahmen in den Frachtraumboden ermöglicht.

Im Riegelelement können Lastaufnahmeeinrichtungen, insbesondere Rollen, Kugelrollen oder Nachlaufrollen, vorgesehen sein, wobei die Lastaufnahmeeinrichtungen vorzugsweise im Rahmen verschiebbar angeordnet sind. Die Lastaufnahmeeinrichtungen erleichtern das Bewegen der Container über das Riegelelement hinweg, indem sie eine (Teil-)Last der Container tragen und die Vertikalposition der Container relativ zum Riegel definieren. Die Verschiebbarkeit der Lastaufnahmeeinrichtungen ermöglicht es, die Lastaufnahmeeinrichtungen beispielsweise abhängig von der Position des Riegels im Riegelelement anzuordnen. Die Lastaufnahmeeinrichtungen können auch herausnehmbar angeordnet sein, so dass dann, wenn keine Lastaufnahmeeinrichtungen benötigt werden, Gewicht eingespart wird.

Bevorzugt weist der Riegel Schrägflächen auf zur Bewegung des Riegels aus der Arbeitsposition in die Ladeposition beim Überfahren durch Container. Ein Vorteil hiervon ist, dass, wenn ein Container auf ein Riegelelement mit einem Riegel in Arbeitposition in bzw. entgegen gesetzt zur Einladefahrtrichtung bewegt wird, der Container auf die Schrägflächen des Riegels drückt und dadurch den Riegel von der Arbeitsposition in die Ladeposition bewegt. Somit kann der Riegel von Containern in bzw. entgegengesetzt zur Einladefahrtrichtung überfahren werden, auch wenn der Riegel sich in der Arbeitsposition befindet.

Bevorzugte Ausführungsformen der Erfindung ergeben sich aus den Unteransprüchen. Nachfolgend wird die Erfindung anhand von Zeichnungen von Ausführungsbeispielen näher erläutert. Hierbei zeigen
- Fig. 1: eine schematische Ansicht eines Riegelelements,
- Fig. 2: einen Querschnitt des Riegelelements entlang der Linie II-II aus Fig. 1.,
- Fig. 3: eine perspektivische Sicht eines Riegelelements mit den Riegeln in der Arbeitsposition,
- Fig. 4: eine perspektivische Sicht des Riegelelements nach Fig. 3 mit einem Riegel in einer mittleren und einem Riegel in einer äußeren Position,
- Fig. 5: eine perspektivische Sicht des Riegelelements nach den Fig. 3 und 4 mit beiden Riegeln in einer äußeren Position,
- Fig. 6: eine perspektivische Sicht des Riegelelements nach den Fig. 3-5 mit den beiden Riegeln in Ladeposition,
- Fig. 7: eine perspektivische Sicht des Riegelelements nach den Fig. 3-6 mit zwei Swivel-Castern als Lastaufnahmeeinrichtungen,
- Fig. 8: eine perspektivische Sicht des Riegelelements nach den Fig. 3-7 mit zwei Rollen als Lastaufnahmeeinrichtungen,
- Fig. 9: eine Aufsicht auf das Riegelelement nach Fig. 3,
- Fig. 10: eine Seitenansicht des Riegelelements entlang der Linie X-X aus Fig. 9,
- Fig. 11: eine Rolle als Lastaufnahmeeinrichtung,
- Fig. 12: einen Swivel-Caster als Lastaufnahmeeinrichtung,
- Fig. 13: eine Längsansicht des Riegelelements entlang der Linie XIII-XIII aus Fig. 9, und
- Fig. 14: eine perspektivische Sicht auf ein Riegelelement mit zwei Fahrschlitten.

Bei der nachfolgenden Beschreibung werden für gleiche und gleich wirkende Teile dieselben Bezugsziffern verwendet.

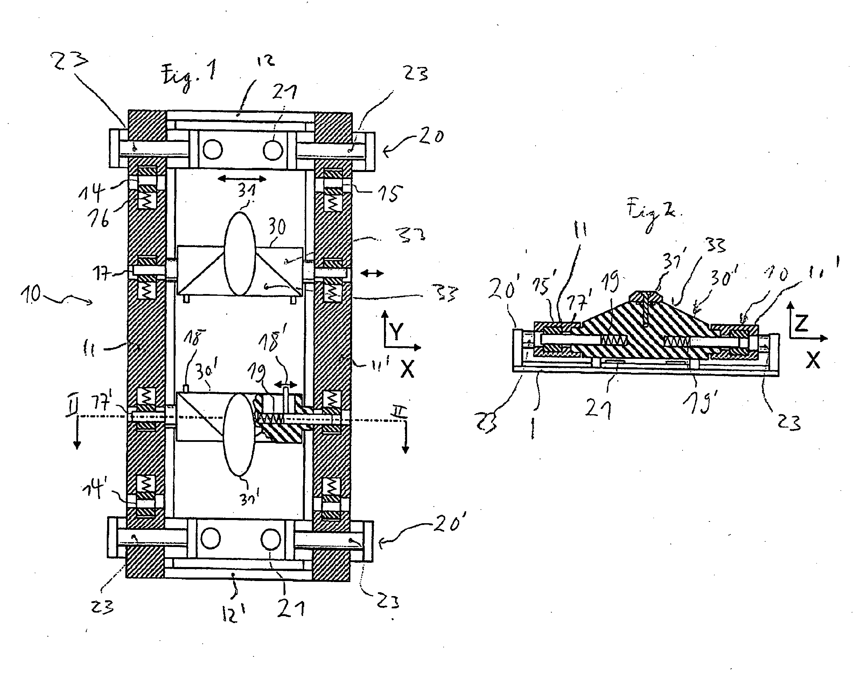

In Fig. 1 ist ein Riegelelement in einer schematischen Ansicht gezeigt. Das Riegelelement umfasst einen Rahmen 10, der über Befestigungseinrichtungen 20, 20' verfügt, mit denen der Rahmen 10 an einem Frachtraumboden 1 eines Flugzeugs befestigt werden kann. Der Rahmen 10 umfasst zwei Seitenschienen 11, 11' und endseitige Traversen 12, 12'. Am Rahmen 10 des Riegelelements sind zwei Riegel 30, 30' in Längsrichtung des Riegelelements, die der Querrichtung des Flugzeugs (y; -y) entspricht, verschiebbar angebracht, die jeweils eine Klaue 31, 31' umfassen. Die Klauen 31, 31' zeigen in einer Arbeitsposition der beiden Riegel 30, 30' zum Festhalten der (nicht gezeigten) Container in zwei entgegen gesetzte Richtungen entlang der Längsrichtung des Riegelelements. Die Riegel 30, 30' sind in Längsrichtung des Riegelelements verschiebbar, um die Positionen der Riegel 30, 30' und damit den Abstand zwischen diesen Riegeln 30, 30' und weiteren, nicht gezeigten Riegelelementen einfach und schnell zu ändern.

Die Riegel 30, 30' umfassen Achsstummel 17, 17' als Rastelemente, die in Gegenrastelemente 15, die sich an definierten Positionen im Rahmen 10 befinden, eingreifen können. Die definierten Positionen korrespondieren mit Normen von Containern, so dass die Abstände der Riegel 30, 30' schnell an die Normgrößen der Container angepasst werden können. Die Riegel 30, 30' umfassen jeweils zwei Lösungshebel 18, 18', die gegen eine Federkraft einer Festsetzfeder 19 in Richtung der Mitte des jeweiligen Riegels 30, 30' verschiebbar sind, um die Achsstummel 17, 17' aus den Gegenrastelementen 15 zu lösen. Die Achsstummel 17, 17' können also in den Riegel 30, 30' hineingezogen werden. Durch die Festsetzfeder 19 können die Achsstummel 17, 17' an den definierten Positionen einrasten. So wird der Riegel 30, 30' an der jeweiligen definierten Position festgesetzt.

Die Gegenrastelemente 15 umfassen federbeaufschlagte Rastschlitten 14, 14', die eine Bewegung der Riegel 30, 30' gegen die Kraft einer Feder 16 in Längsrichtung des Riegelelements ermöglichen. Die Feder 16 drückt den Riegel 30, 30' gegen den Container, den der Riegel sichert. Sollte sich durch Verformungen des Riegelelements der Abstand zwischen dem Riegel 30, 30' und dem gesicherten Container vergrößern, so bewegt die Feder 16 den Riegel 30, 30' auf den Container zu und gleicht so die Verformung des Frachtraumbodens aus. Somit wird sichergestellt, dass auch bei einer Verformung des Frachtraumbodens der Riegel 30, 30' einen Teilabschnitt des Containers umgreift und hält. Bei einer Verkleinerung des Abstands zwischen dem Riegel 30, 30' und weiteren Riegeln zum Sichern des Containers durch eine Verformung des Frachtraumbodens wird der Riegel 30, 30' vom gesicherten Container gegen die Kraft der Feder 16 bewegt und damit die Verformung ausgeglichen.

Dadurch wird eine zu große Belastung des Riegels 30, 30', die beispielsweise zu einem Abbrechen des Riegels 30, 30' bzw. der Klaue 31, 31' führen könnte, verhindert.

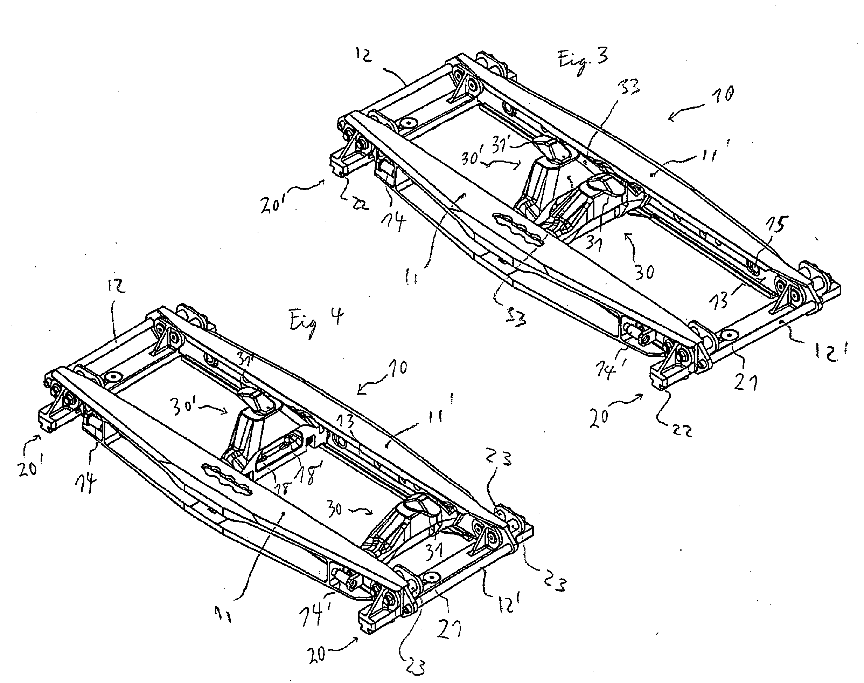

Die in Fig. 1 gezeigte Ausführungsform eines Riegelelements umfasst an den zwei gegenüber liegenden Längsenden Befestigungseinrichtungen 20, 20', mit denen der Rahmen 10 am Frachtraumboden 1 befestigbar ist. Der Rahmen 10 wird vorzugsweise durch die Befestigungseinrichtungen 20, 20' an Schienen im Frachtraumboden befestigt. Der Abstand der Befestigungseinrichtungen 20, 20' eines Riegelelements entspricht dem Abstand zweier, insbesondere benachbarter Schienen im Frachtraumboden. Hakenförmige Befestigungsteile 22 (siehe Fig. 3 - 8; 13) der Befestigungseinrichtung 20, 20' sind in die Schiene einführbar. Das Riegelelement kann nun derart verschoben werden, dass die in die Schiene eingeführten Befestigungsteile 22 der Befestigungseinrichtung 20, 20' in eine Höhenrichtung des Flugzeugs (z) in der Schiene festgesetzt sind. Jede der Befestigungseinrichtungen 20, 20' umfasst mindestens ein in Höhenrichtung des Flugzeug (z) verlaufendes Befestigungselement 21, 21', mit dem die Befestigungseinrichtung 20, 20' an der Schiene festgesetzt werden kann, und die Befestigungseinrichtung 20, 20' somit in einer Schienenrichtung, die der Längsrichtung des Flugzeugs (x) entspricht, festsetzt.

Bei der hier gezeigten Ausführungsform sind die Befestigungseinrichtungen 20, 20' mit dem Rahmen 10 in Längsrichtung des Flugzeugs (x) verschiebbar mittels Führungsschienen 23 verbunden, um die Position der Riegel 30, 30' in Längsrichtung des Flugzeugs (x) an die Position des oder der Container anzupassen. Bevorzugt sind Teile der Befestigungseinrichtungen 20, 20' unterhalb der Längsenden von in Querrichtung (y) verlaufenden Seitenschienen 11, 11' des Rahmens 10 angeordnet, so dass ein gleichmäßiger Lasteintrag in den Frachtraumboden gewährleistet ist.

Fig. 2 zeigt einen Querschnitt durch das Riegelelement der Fig. 1 entlang der Linie II-II. Erkennbar ist, wie die Achsstummel 17, 17' des Riegels 30, 30' in die Gegenrastelemente 15 in dem Rahmen 10 eingreifen, die hier als Rastschlitten 14, 14' ausgebildet sind. Die Schwenkachse der Riegel 30, 30' ist vorzugsweise identisch mit der Achse der Festsetzvorrichtungen, mit denen die Riegel 30, 30' am Rahmen 10 festgesetzt sind.

Dadurch können beim Halten auftretende Kräfte direkt von den Riegeln 30, 30' durch die Festsetzvorrichtung in den Rahmen 10 geleitet werden. Auf den Rahmen 10 wirkende Scherkräfte bzw. Drehmomente werden hierdurch reduziert, die dadurch entstehen, dass Kräfte auf den Riegel 30, 30' wirken. Der Riegel 30, 30' ist um die Achse, die von einem Achsstummel 17, 17' zu dem anderen verläuft, von der hier gezeigten Arbeitsposition in eine abgesenkte Ladeposition verschwenkbar.

Fig. 3 zeigt eine perspektivische Ansicht eines Riegelelements. Die beiden Riegel 30, 30' sind in einer hochgestellten Arbeitsposition zum Festhalten von Containern nahe der Mitte des Riegelelements an definierten Positionen festgesetzt. Die Riegel 30, 30' sind in einer Führung 13, 13' verschiebbar und festsetzbar angeordnet. Die Riegel 30, 30' weisen auf drei Seiten Schrägflächen 33 auf, so dass sie beim Überfahren durch einen Container in die abgesenkte Ladeposition verschwenkt werden.

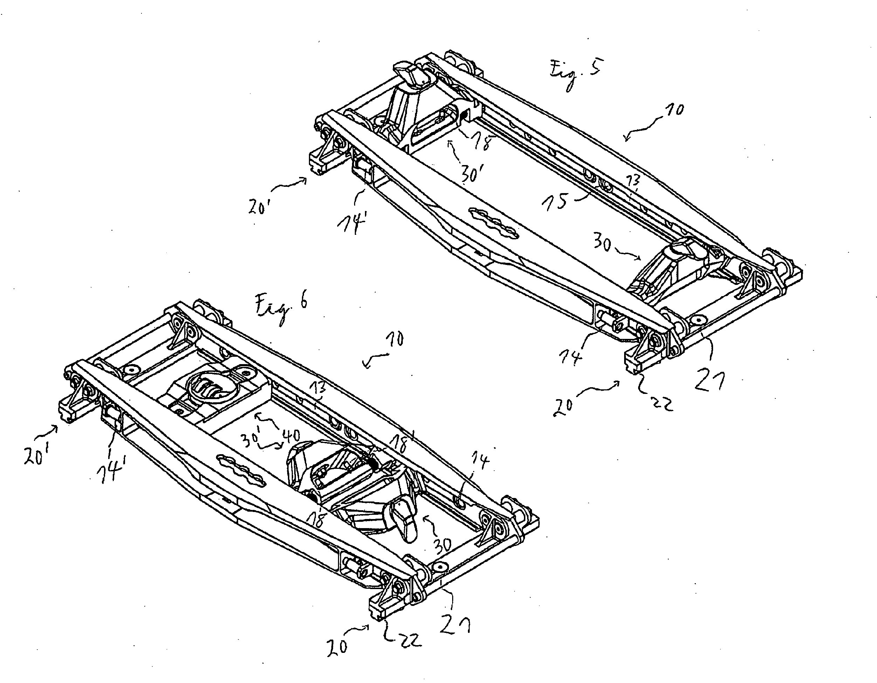

Fig. 4 zeigt eine perspektivische Ansicht des Riegelelements nach Fig. 3, wobei sich ein Riegel 30 nahe der Mitte des Riegelelements befindet, während ein Riegel 30' in der Führung 13, 13' in die Nähe eines Längsendes des Riegelelements verschoben und festgesetzt ist. Fig. 5 zeigt das Riegelelement nach den Fig. 3 und 4 mit den beiden Riegel 30, 30'jeweils an ein Längsende des Riegelelements in der Führung 13, 13' verschoben und festgesetzt.

Fig. 6 zeigt das Riegelelement nach den Fig. 3 - 5, wobei sich beide Riegel 30, 30' in abgesenkter Ladeposition befinden, in der sie nicht über die Ebene des Rahmens 10 nach oben hinaus stehen, so dass das Riegelelement und die Riegel 30, 30' von Containern überfahren werden können. Das Riegelelement umfasst weiterhin neben den beiden Riegeln 30, 30' eine Lastaufnahmeeinrichtung 40 in der Form eines Swivel-Casters, die in die Führung 13, 13' eingesetzt ist. Die Lastaufnahmeeinrichtungen 40 sind im Rahmen 10 verschiebbar und herausnehmbar angeordnet. Sie unterstützen die Bewegung der Container über das Riegelelement hinweg, indem sie eine (Teil-) Last des Containers tragen. Der Swivel-Caster umfasst zwei Rollen, die in einem drehbaren Teller gelagert sind. Sie erleichtern durch Drehung der Rollen parallel zu der Bewegungsrichtung der Container die Bewegung der Container in eine beliebige Richtung.

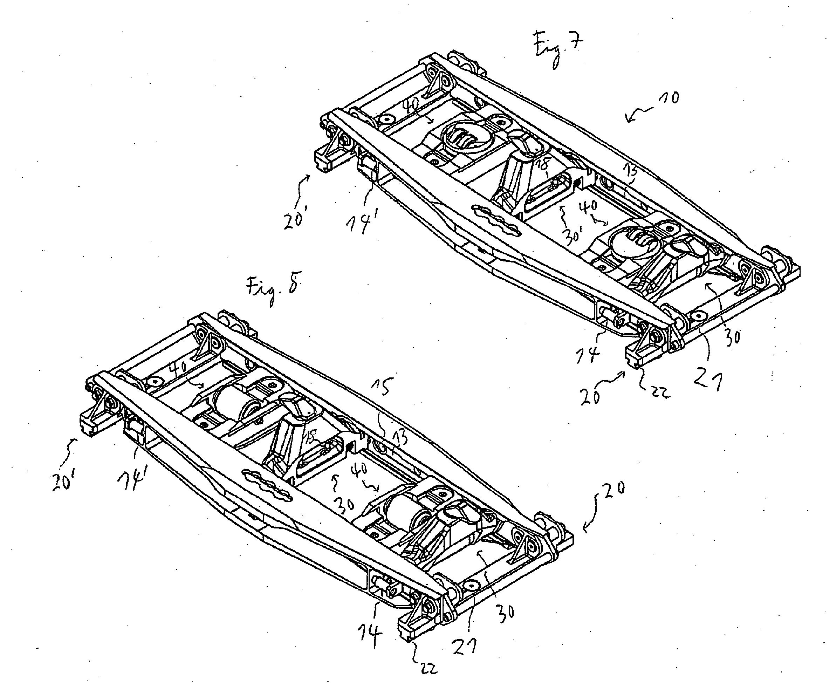

Fig. 7 zeigt das Riegelelement nach den Fig. 3-6 mit zwei Riegeln 30, 30' in hochgestellter Arbeitspositionen und zwei am Rahmen 10 angebrachte Swivel-Castern.

In Fig. 8 umfasst das Riegelelement nach den Fig. 3 - 7 zwei Rollen als Lastaufnahmeeinrichtungen 40. Durch die Rollen wird die Bewegung von Containern parallel zur Rollenrichtung, die in Fig. 8 quer zur Längsrichtung des Riegelelements verläuft, unterstützt, indem die Rollen eine (Teil-)Last des Containers tragen. Die Lastaufnahmeeinrichtungen 40 können auch Kugelrollen umfassen.

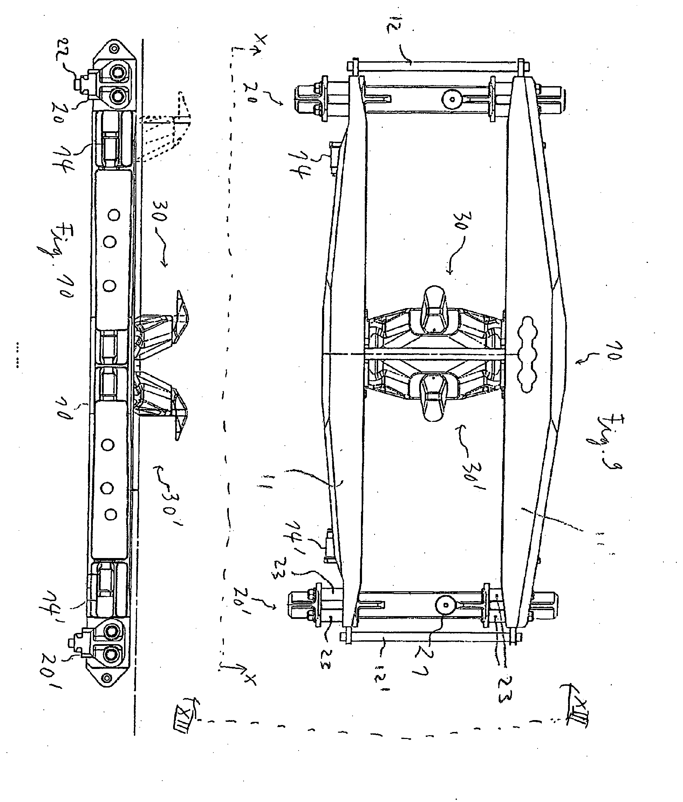

Fig. 9 zeigt eine Aufsicht auf das Riegelelement nach Fig. 3. Die Befestigungseinrichtungen 20, 20' sind um und unterhalb von Längsenden der beiden Seitenschienen 11, 11' angeordnet. Fig. 10 zeigt eine Seitenansicht des Riegelelements nach Fig. 9 entlang der Linie X-X. Die Riegel 30, 30' befinden sich beide nahe der Mitte des Riegelelements. Durch gestrichelte Linien ist die Position nahe einem Längsende des Riegelelements, in die der eine Riegel 30 verschoben werden kann, in Fig. 9 angedeutet.

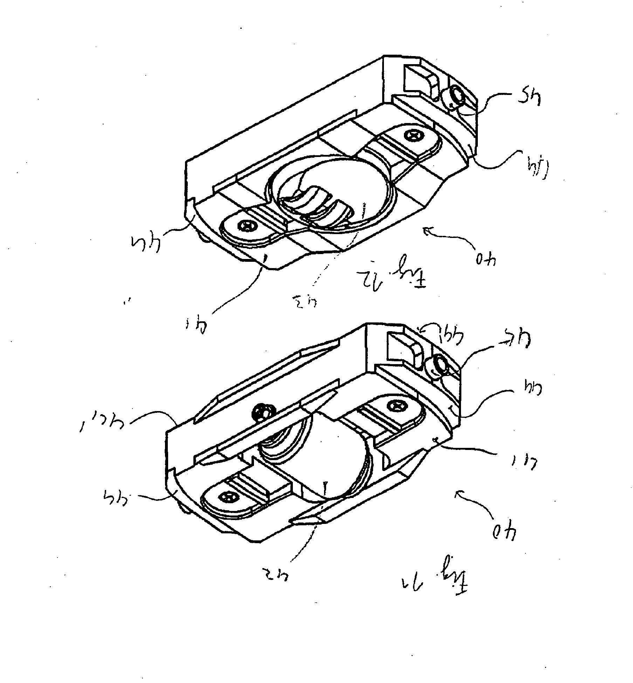

Fig. 11 und Fig. 12 zeigen zwei Ausführungsformen der Lastaufnahmeeinrichtungen 40 als Rolle bzw. Swivel-Caster. Hierbei sind Halterahmen 41 vorgesehen, in denen eine Rolle 42 bzw. ein Swivel-Caster 43 (Nachlaufrolle) gelagert ist. Der Halterahmen 41 weist endseitige Führungsflächen 44, 44' auf, welche in die Führung 13, 13' im Rahmen 10 einsetzbar sind. Zum Einsetzen wird die Lastaufnahmeeinrichtung höhenrichtig im Rahmen positioniert und dann derart um die Vertikalachse verdreht, dass die Führungsflächen 44, 44' in die Führung 13, 13' des Rahmens 10 schlüpfen. Zum Fixieren in dieser Position dienen verschiebbare Haltezapfen 45, die in entsprechende Ausnehmungen im Rahmen 10 greifen.

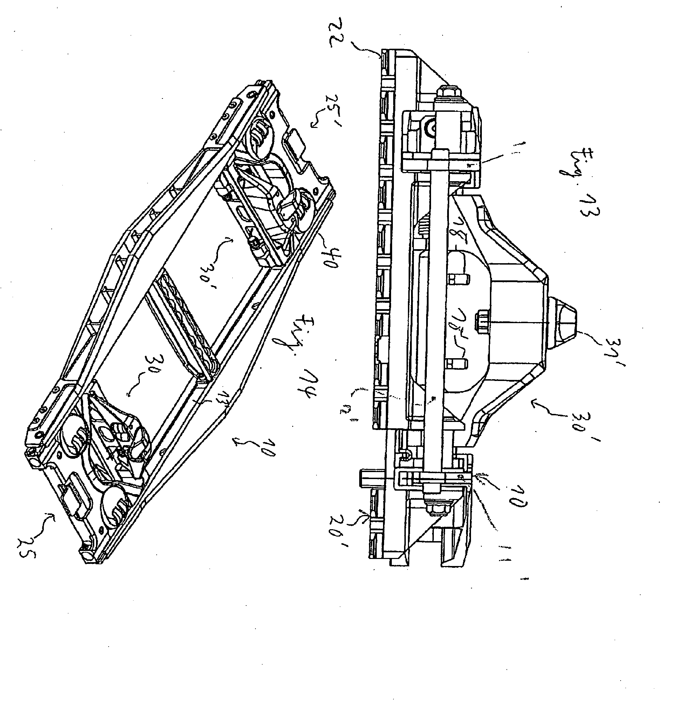

Fig. 13 zeigt eine Seitenansicht des Riegelelements nach Fig. 9 entlang der Linie XIII-XIII. Der Riegel 30' mit einer Klaue 31' in Fig. 13 befindet sich in der Arbeitsposition.

Fig. 14 zeigt ein Riegelelement mit zwei Riegeln 30, 30', die jeweils einen Fahrschlitten 25, 25' sowie eine Klaue 31, 31' umfassen. Die Klauen 31, 31' sind in dem Fahrschlitten 25, 25' verschwenkbar gehalten, so dass sie von der in Fig. 14 gezeigten Arbeitsposition in die abgesenkte Ladeposition verschwenkt werden können.

Die Fahrschlitten 25, 25' sind in der Führung 13' verschiebbar und an definierten Positionen festsetzbar. Die Klauen 31, 31' sind in den Fahrschlitten 25, 25' derart federnd gelagert, dass die Klauen 31, 31' in Längsrichtung des Riegelelements gegen eine Federkraft innerhalb des Fahrschlittens 25, 25' verschiebbar sind. Der Fahrschlitten 25, 25' umfasst weitere Elemente, wie z.B. eine oder mehrere Lastaufnahmeeinrichtungen 40.

Der Frachtraumboden eines Flugzeugs kann mit Hilfe der beschriebenen Riegelelemente für Container oder dergleichen Fracht mit verschiedenen Größen konfiguriert werden. Hierzu werden die Riegelelemente an den Schienen am Frachtraumboden befestigt. Nun kann der Abstand zwischen den Riegeln auf verschiedene Normgrößen von Containern eingestellt werden. Dies kann durch ein Verschieben und Festsetzen mindestens eines Riegels 30, 30' entlang der Querrichtung (y; -y) geschehen.

### Bezugszeichenliste:

- 1: Frachtraumboden
- 10: Rahmen
- 11, 11': Seitenschiene
- 12, 12': Traverse
- 13, 13': Führung
- 14, 14': Rastschlitten
- 15: Gegenrastelemente
- 16: Feder
- 17, 17': Achsstummel
- 18, 18': Lösungshebel
- 19, 19': Festsetzfeder
- 20, 20': Befestigungseinrichtungen
- 21,21': Befestigungselement
- 22: Befestigungsteil
- 23: Führungsschiene
- 25, 25': Fahrschlitten
- 30, 30': Riegel
- 31, 31': Klaue
- 32: Schrägfläche
- 40: Lastaufnahmeeinrichtungen
- 41: Halterahmen
- 42: Rolle
- 43: Swivel-Caster
- 44, 44': Führungsflächen
- 45: Haltezapfen

## Patentansprüche

1. Riegelelement zum Sichern von Containern oder dergleichen Fracht auf einem Frachtraumboden eines Flugzeugs in einer Vertikalrichtung (z) senkrecht zum Frachtraumboden sowie in einer Querrichtung (y) senkrecht zu einer Längsrichtung (x) des Flugzeugs, umfassend:
einen Rahmen (10),
Befestigungseinrichtungen (20, 20') zum Befestigen des Rahmens (10) am Frachtraumboden, und
mindestens einen am Rahmen (10) angebrachten Riegel (30, 30') zum Festhalten von Containern oder dergleichen Fracht mit jeweils einer Klaue (31, 31') in der Querrichtung (y; -y) zum Umgreifen und Halten eines Teilabschnitts des Containers,
wobei
eine Führung (13, 13') zur Verschiebung des Riegels (30, 30') entlang einer Längsrichtung des Riegelelements, welche der Querrichtung (y; -y) entspricht, und
lösbare Festsetzvorrichtungen zum Festsetzen des Riegels (30, 30') an der Führung (13, 13') vorgesehen sind
**dadurch gekennzeichnet, dass**
der Riegel (30, 30') eine Schwenkachse umfasst, um welche der Riegel (30, 30') von einer hochgestellten Arbeitsposition in eine abgesenkte Ladeposition verschwenkbar gehalten ist, und
die Schwenkachse denjenigen Teil der Festsetzvorrichtungen bildet, über welchen beim Halten auftretende Kräfte in den Rahmen (10) geleitet werden.

2. Riegelelement nach Anspruch 1,
**dadurch gekennzeichnet, dass**
die Festsetzvorrichtungen Rastelemente zum Verriegeln des Riegels (30, 30') und Gegenrastelemente (15) an definierten Positionen im Rahmen (10) umfassen.

3. Riegelelement nach einem der vorhergehenden Ansprüche,
**dadurch gekennzeichnet, dass**
die Festsetzvorrichtungen derart federnd ausgebildet sind, dass der Riegel (30, 30') entgegen einer Federkraft in die Querrichtung (y; -y) verschiebbar ist.

4. Riegelelement nach Anspruch 3,
**dadurch gekennzeichnet, dass**
die Festsetzvorrichtungen im Rahmen (10) geführte und federbeaufschlagte Rastschlitten (14, 14') als Gegenrastelemente (15) umfassen.

5. Riegelelement nach einem der vorhergehenden Ansprüche,
**dadurch gekennzeichnet, dass**
der Riegel (30, 30') einen Fahrschlitten (25, 25') umfasst, in welchem die Klaue (31, 31') verschwenkbar gelagert ist und der in der Führung (13, 13') verschiebbar und festsetzbar ist.

6. Riegelelement nach einem der vorhergehenden Ansprüche,
**dadurch gekennzeichnet, dass**
die Schwenkachse Achsstummel (17, 17') umfasst, die zum Lösen der Festsetzvorrichtungen entgegen einer Federkraft verschiebbar gelagert sind.

7. Riegelelement nach einem der vorhergehenden Ansprüche,
**dadurch gekennzeichnet, dass**
die Befestigungseinrichtungen (20, 20') mit dem Rahmen (10) in Längsrichtung (x) verschiebbar verbunden sind, wobei vorzugsweise Teile der Befestigungseinrichtungen (20, 20') im Bereich von, vorzugsweise zentrisch zu Längsenden von in Querrichtung (y; -y) verlaufenden Seitenschienen (11, 11') des Rahmens (10) angeordnet sind.

8. Riegelelement nach einem der vorhergehenden Ansprüche,
**dadurch gekennzeichnet, dass**
Lastaufnahmeeinrichtungen (40), insbesondere Rollen, Kugelrollen oder Nachlaufrollen, vorgesehen sind, wobei die Lastaufnahmeeinrichtungen (40) vorzugsweise im Rahmen (10) verschiebbar angeordnet sind.

9. Riegelelement nach einem der Ansprüche 7 oder 8,
**dadurch gekennzeichnet, dass**
die Lastaufnahmeeinrichtungen (40) an dem Rahmen (10) herausnehmbar angeordnet sind.

10. Riegelelement nach einem der vorhergehenden Ansprüche,
**dadurch gekennzeichnet, dass**
der Riegel (30, 30') auf mindestens einer Seite Schrägflächen aufweist zur Bewegung des Riegels (30, 30') aus der Arbeitsposition in die Ladeposition beim Überfahren durch Container in einer Richtung, die ungleich einer Halterichtung des Riegels (30, 30') ist.

11. Frachtraumboden eines Flugzeugs,
wobei der Frachtraumboden Schienen, die am Frachtraumboden in Längsrichtung des Flugzeugs (x) befestigt sind, und
mindestens ein Riegelelement nach einem der vorhergehenden Ansprüche umfasst, das an den Schienen befestigt ist.

12. Frachtraumboden nach Anspruch 11,
wobei das mindestens eine Riegelelement zwischen zwei, insbesondere benachbarten Schienen befestigt ist.

13. Verfahren zur Konfiguration eines Frachtraumes eines Flugzeugs für Container oder dergleichen Fracht verschiedener Größen,
umfassend folgende Schritte:
- Montage von Schienen in dem Frachtraum des Flugzeugs,
- Befestigen von mindestens einem Riegelelement nach einem der Ansprüche 1-12 an den Schienen oder an dem Frachtraumboden des Flugzeugs,
- Einstellen des Abstands zwischen zwei Riegeln (30, 30') zweier Riegelelemente (10) auf Normgrößen von Containern oder dergleichen Fracht durch ein Verschieben und Festsetzen mindestens eines Riegels (30, 30') entlang der Querrichtung (y).

## Claims

1. Locking element for securing containers or similar cargo on a cargo hold floor of an aircraft in a vertical direction (z) perpendicular to the cargo hold floor and in a transverse direction (y) perpendicular to a longitudinal direction (x) of the aircraft, comprising:
a frame (10),
attachment devices (20, 20') for attaching the frame (10) to the cargo hold floor, and
at least one locking member (30, 30'), which is mounted on the frame (10), for holding containers or similar cargo in place with a respective jaw (31, 31') in the transverse direction (y; -y) for engaging around and holding a portion of the container,
wherein
there are provided a guide means (13, 13') for displacement of the locking member (30, 30') along a longitudinal direction of the locking element, which direction corresponds to the transverse direction (y; -y),
and
releasable fixing devices for fixing the locking member (30, 30') on the guide means (13, 13'),
**characterised in that**
the locking member (30, 30') comprises a pivot shaft about which the locking member (30, 30') is mounted so as to be pivotable from an upright working position to a lowered loading position, and
the pivot shaft forms that part of the fixing devices *via* which forces occurring during holding are conducted into the frame (10).

2. Locking element according to claim 1,
**characterised in that**
the fixing devices comprise detent elements for locking the locking member (30, 30') and counter-detent elements (15) at defined positions in the frame (10).

3. Locking element according to either one of the preceding claims,
**characterised in that**
the fixing devices are constructed so as to be resilient in such a way that the locking member (30, 30') is displaceable in the transverse direction (y; -y) against the force of a spring.

4. Locking element according to claim 3,
**characterised in that**
the fixing devices comprise, as counter-detent elements (15), spring-loaded detent carriages (14, 14') which are guided in the frame (10).

5. Locking element according to any one of the preceding claims,
**characterised in that**
the locking member (30, 30') comprises a travelling carriage (25, 25') in which the jaw (31, 31') is pivotally mounted and which is displaceable and fixable in the guide means (13, 13').

6. Locking element according to any one of the preceding claims,
**characterised in that**
the pivot shaft comprises shaft stubs (17, 17') which are mounted so as to be displaceable against the force of a spring to release the fixing devices.

7. Locking element according to any one of the preceding claims,
**characterised in that**
the attachment devices (20, 20') are connected to the frame (10) so as to be displaceable in the longitudinal direction (x), parts of the attachment devices (20, 20') preferably being arranged in the region of, preferably centrally with respect to longitudinal ends of side rails (11, 11') of the frame (10) running in the transverse direction (y; -y).

8. Locking element according to any one of the preceding claims,
**characterised in that**
load-bearing devices (40), especially rollers, ball rollers or follower rollers, are provided, the load-bearing devices (40) preferably being arranged so as to be displaceable in the frame (10).

9. Locking element according to either one of claims 7 and 8,
**characterised in that**
the load-bearing devices (40) are removably arranged on the frame (10).

10. Locking element according to any one of the preceding claims,
**characterised in that**
the locking member (30, 30') has, on at least one side, sloping faces for movement of the locking member (30, 30') from the working position to the loading position when containers pass over it in a direction that is not the holding direction of the locking member (30, 30').

11. Cargo hold floor of an aircraft,
wherein the cargo hold floor comprises rails mounted on the cargo hold floor in the longitudinal direction of the aircraft (x), and
at least one locking element in accordance with any one of the preceding claims, which locking element is mounted on the rails.

12. Cargo hold floor according to claim 11,
wherein the at least one locking element is attached between two rails, especially adjacent rails.

13. Method of configuring a cargo hold of an aircraft for containers or similar cargo of different sizes,
comprising the following steps:
- mounting rails in the cargo hold of the aircraft,
- attaching at least one locking element according to any one of claims 1 to 12 to the rails or to the cargo hold floor of the aircraft,
- adjusting the distance between two locking members (30, 30') of two locking elements (10) to standard sizes of containers or similar cargo by displacement and fixing of at least one locking member (30, 30') along the transverse direction (y).

## Revendications

1. Elément de verrouillage destiné à fixer des conteneurs ou du fret analogue sur un plancher de soute d'un avion dans une direction verticale (z) perpendiculaire au plancher de soute ainsi que dans une direction transversale (y) perpendiculaire à une direction longitudinale (x) de l'avion, comprenant :
- un cadre (10),
- des dispositifs de fixation (20, 20') pour la fixation du cadre (10) au plancher de soute, et
- au moins un verrou (30, 30') placé sur le cadre (10) pour immobiliser des conteneurs ou du fret analogue avec chaque fois une griffe (31, 31') dans la direction transversale (y ; -y) pour enserrer et maintenir une région partielle du conteneur,
dans lequel
il est prévu un guidage (13, 13') pour le déplacement du verrou (30, 30') le long d'une direction longitudinale de l'élément de verrouillage, qui correspond à la direction transversale (y ; -y), et
des dispositifs de blocage détachables pour bloquer le verrou (30, 30') sur le guidage (13, 13'),
**caractérisé en ce que** le verrou (30, 30') comprend un axe de pivotement, autour duquel le verrou (30, 30') est maintenu de façon pivotante d'une position de travail relevée à une position de repos abaissée, et
l'axe de pivotement forme la partie des dispositifs de blocage, par laquelle des forces apparaissant lors du maintien sont conduites dans le cadre (10).

2. Elément de verrouillage selon la revendication 1, **caractérisé en ce que** les dispositifs de blocage comprennent des éléments d'encliquetage pour verrouiller le verrou (30, 30') et des contre-éléments de verrouillage (15) à des positions définies dans le cadre (10).

3. Elément de verrouillage selon l'une quelconque des revendications précédentes, **caractérisé en ce que** les dispositifs de blocage sont munis de ressorts, de telle manière que le verrou (30, 30') puisse se déplacer contre une force de ressort dans la direction transversale (y ; -y).

4. Elément de verrouillage selon la revendication 3, **caractérisé en ce que** les dispositifs de blocage comprennent des coulisseaux d'encliquetage (14, 14') à ressort et guidés dans le cadre (10) en tant que contre-éléments d'encliquetage (15).

5. Elément de verrouillage selon l'une quelconque des revendications précédentes, **caractérisé en ce que** le verrou (30, 30') comprend un coulisseau roulant (25, 25'), dans lequel la griffe (31, 31') est montée de façon pivotante et qui peut être déplacé et bloqué dans le guidage (13, 13').

6. Elément de verrouillage selon l'une quelconque des revendications précédentes, **caractérisé en ce que** l'axe de pivotement comprend des bouts d'axe (17, 17'), qui sont montés de façon déplaçable contre une force de ressort pour la libération des dispositifs de blocage.

7. Elément de verrouillage selon l'une quelconque des revendications précédentes, **caractérisé en ce que** les dispositifs de fixation (20, 20') sont assemblés au cadre (10) d'une façon déplaçable en direction longitudinale (x), dans lequel de préférence des parties des dispositifs de fixation (20, 20') sont disposées dans la région, de préférence au centre par rapport aux extrémités longitudinales, de rails latéraux (11, 11') du cadre (10) s'étendant en direction transversale (y ; -y).

8. Elément de verrouillage selon l'une quelconque des revendications précédentes, **caractérisé en ce qu'**il est prévu des dispositifs de reprise de charge (40), en particulier des galets, des galets sphériques, des rouleaux suiveurs, dans lequel les dispositifs de reprise de charge (40) sont disposés de préférence de façon déplaçable dans le cadre (10).

9. Elément de verrouillage selon une des revendications 7 ou 8, **caractérisé en ce que** les dispositifs de reprise de charges (40) sont disposés de façon amovible sur le cadre (10).

10. Elément de verrouillage selon l'une quelconque des revendications précédentes, **caractérisé en ce que** le verrou (30, 30') présente sur au moins un côté des faces obliques pour le mouvement du verrou (30, 30') de la position de travail à la position de repos lors du franchissement par des conteneurs dans une direction, qui n'est pas conforme à une direction de maintien du verrou (30, 30').

11. Plancher de soute d'un avion, dans lequel le plancher de soute comprend des rails, qui sont fixés au plancher de soute en direction longitudinale (x) de l'avion, et au moins un élément de verrouillage selon l'une quelconque des revendications précédentes, qui est fixé aux rails.

12. Plancher de soute selon la revendication 11, dans lequel ledit au moins un élément de verrouillage est fixé entre deux rails, en particulier voisins.

13. Procédé de configuration d'une soute d'un avion pour des conteneurs ou du fret analogue de différentes grandeurs, comprenant les étapes suivantes :
- montage de rails dans la soute de l'avion,
- fixation d'au moins un élément de verrouillage selon l'une quelconque des revendications 1 à 12 sur les rails ou sur le plancher de soute de l'avion,
- réglage de la distance entre deux verrous (30, 30') de deux éléments de verrouillage (10) à des grandeurs normalisées de conteneurs ou de fret analogue par un déplacement et un blocage d'au moins un verrou (30, 30') le long de la direction transversale (y).
